# EUROPÄISCHE PATENTSCHRIFT

(11) **EP 0 586 670 B1**
(45) Veröffentlichungstag und Bekanntmachung des Hinweises auf die Patenterteilung: **11.08.2004**
(21) Anmeldenummer: 93907757.4
(22) Anmeldetag: 26.03.1993
(51) Int. Cl.: F16C 13/02, D21G 1/02, F16C 23/00

(54) **LAGERBAUGRUPPE**
BEARING UNIT
ENSEMBLE-PALIER

(30) Priorität: 01.04.1992 DE 4210685
(43) Veröffentlichungstag der Anmeldung: 16.03.1994
(73) Patentinhaber: Voith Paper Patent GmbH, 89522 Heidenheim (DE)
(72) Erfinder: GRABSCHEID, Joachim, D-89547 Heuchlingen (DE)
(86) Internationale Anmeldenummer: PCT/DE1993/000284
(87) Internationale Veröffentlichungsnummer: WO 1993/020361

(56) Entgegenhaltungen:
- EP-A- 0 232 011
- WO-A-92/17641
- DE-A- 2 328 989
- DE-C- 933 184
- DE-C- 3 040 891
- US-A- 1 825 293
- US-A- 4 302 062

## Beschreibung

Die Erfindung betrifft eine Lagerbaugruppe zur Lagerung eines Lagerzapfens einer drehbaren Walze, Trommel (z.B. Trockenzylinder) oder dergleichen, im einzelnen mit den im oberbegriff des Anspruches 1 angegebenen Merkmalen. Die Erfindung betrifft sowohl Lagerbaugruppen für eine Walze oder Trommel, deren Lagerzapfen gemeinsam mit dem Walzenkörper drehbar sind, als auch Lagerbaugruppen für eine Walze oder Preßeinheit, durch die sich ein stationäres Joch mit stationären Lagerzapfen erstreckt; dies ist z.B. eine Durchbiegungseinstellwalze oder eine Langspalt-Preßeinheit.

Noch genauer gesagt: Die Erfindung betrifft eine Lagerbaugruppe, bei welcher der Lagerzapfen in der Achsrichtung im Lagergehäuse fixiert ist und bei der das Lagergehäuse mit Hilfe von Axialführungselementen mit einem Sockel verbunden ist. Letzterer ist an einem Maschinengestell oder Fundament befestigt; unter Umständen kann er auch an einem Schwenkhebel befestigt sein. Die Axialführungselemente erlauben es, daß sich der drehbare Walzenkörper und/oder das stationäre Joch während des Betriebes in Längsrichtung ausdehnen, wobei der Lagerzapfen gemeinsam mit dem Lagergehäuse in Längsrichtung wandert. Diese Anordnung ermöglicht es, daß - im Falle eines drehbaren Lagerzapfens - das Wälzlager im Lagergehäuse axial fixiert, also in diesem axial nicht verschiebbar ist. Im Falle eines stationären Lagerzapfens ist dieser ebenfalls im Lagergehäuse axial fixiert. In beiden Fällen kann also auf Gleitflächen verzichtet werden, die einerseits zur Übertragung großer Kräfte (z.B. Preßkräfte) und anderseits für die genannte Axialverschiebung geeignet sein müßten.

Ein bevorzugtes Anwendungsgebiet der Erfindung sind Preßvorrichtungen für eine laufende Bahn. Eine solche Preßvorrichtung kann beispielsweise Teil einer Papierherstellungsmaschine sein und zum Entwässern oder Glätten der herzustellenden Papierbahn dienen. Eine derartige Vorrichtung setzt sich vorzugsweise aus einer ersten drehbaren Preßwalze, deren Lagerzapfen gemeinsam mit dem Walzenkörper drehbar sind und aus einer zweiten Preßwalze oder einer Preßeinheit, durch die sich ein stationäres Joch mit stationären Lagerzapfen erstreckt zusammen. Bei diesen Fällen ist am stationären Joch eine innenliegende Belastungseinrichtung vorgesehen. Hierbei handelt es sich beispielsweise um hydrostatische Stützelemente, welche die Preßkraft vom stationären Joch auf den Walzenmantel übertragen oder um einen Schuh, der die Preßkraft vom stationären Joch über einen flexiblen Preßmantel oder über ein flexibles Preßband auf die erste Preßwalze überträgt. Noch genauer gesagt: Es handelt sich vorzugsweise um eine Preßvorrichtung mit geschlossenem Kraftsystem; dies bedeutet, daß die aus der Preßkraft resultierenden Kräfte nicht in ein Maschinengestell, Fundament oder dergleichen eingeleitet, sondern mit Hilfe von Zugelementen unmittelbar von der ersten Preßwalze auf die zweite Preßwalze oder die genannte Preßeinheit übertragen werden. Diese Zugelemente greifen vorzugsweise unmittelbar an den einander gegenüberliegenden Lagerböcken an; siehe z.B. die nicht vorreröffentlichte Patentanmeldung DE 41 10 205 A (WO 92 17 641 A).

Die US 4 272 317 A beschreibt eine Preßvorrichtung, bei der ebenfalls mit Hilfe von Zugstäben ein geschlossenes Kraftsystem gebildet ist. Die obere Preßwalze dieser Preßvorrichtung ist mit Hilfe von Axialführungselementen an einem Sockel aufgehängt. Diese Axialführungselemente brauchen also nur das Eigengewicht der gesamten Preßvorrichtung zu tragen; sie dienen nicht zur Übertragung der Preßkräfte. Im einzelnen ist dort folgendes vorgesehen: Am einen Walzenende ist das Lagergehäuse mittels zweier Laschen an einem Sockel aufgehängt, das seinerseits an der Unterseite eines Gestells befestigt ist. Am anderen Walzenende ist das Lagergehäuse mittels eines Gelenks an einem ähnlichen Sockel aufgehängt. Ein Nachteil dieser Konstruktion ist, daß sie nur anwendbar ist, wenn die Walze (bzw. die gesamte Preßvorrichtung) an der Unterseite eines Gestells aufgehängt werden kann; denn bei allen anderen Anordnungen, z.B. bei einer stehenden Anordnung, wäre diese Kontruktion instabil.

Bekannt sind auch sogenannte Schneiden-Lager. Hier ruht das Lagergehäuse auf Wälzkörpern, die ihrerseits auf der Oberseite eines Sockels abgestützt sind. Ein Nachteil dieser Konstruktion ist, daß sie ausschließlich für eine stehende Anordnung geeignet ist. Außerdem darf die Kraftübertragung vom Lagergehäuse auf den Sockel immer nur in Richtung von oben nach unten stattfinden (nicht in der umgekehrten Richtung), und die Höhe der übertragbaren Kraft ist relativ gering.

EP 0 232 011 A zeigt eine konstruktive Lösung zum Verbinden eines Lagergehäuses mit einem Sockel mit Hilfe wenigstens zweier Axialgleitführungselemente. Diese dienen dazu, die Wärmeausdehnung aufzunehmen. Dabei führt das radiale Spiel um Befestigungsschrauben zu einer gewissen Verschiebbarkeit quer zur Richtung der Längsachse.

Diese Lösung ist jedoch nicht für alle denkbaren Einbau-Situationen und Kraftrichtungen geeignet.

Der vorliegenden Erfindung liegt deshalb die Aufgabe zugrunde, eine Lagerbaugruppe mit Axialführungselementen derart auszubilden, daß sie für alle denkbaren Einbau-Situationen und Kraftrichtungen geeignet ist, also sowohl für hängende als auch für stehende Anordnungen; genauso soll es möglich sein, daß die Lagerbaugruppe an der Seite eines stehenden Gestellteiles befestigt wird.

Falls das Lagergehäuse und der Sockel während des Betriebes ungleich erwärmt oder abgekühlt werden, kann die Gefahr auftreten, daß die Gleitführungselemente zum Klemmen neigen. In diesem Fall ist eine leichte axiale Verschiebbarkeit des Lagergehäuses relativ zum Sockel nicht mehr sicher gewährleistet. Deshalb besteht eine zusätzliche Aufgabe der Erfindung darin, Maßnahmen zu treffen, durch welche eine leichte axiale Verschiebbarkeit auch bei unterschiedlicher Temperierung von Lagergehäuse und Sockel gewährleistet ist.

Diese Aufgaben werden durch die Merkmals-Kombinationen gemäß Anspruch 1 gelöst. Gemäß Anspruch 1 sind zwischen dem Lagergehäuse und dem Sockel Gleitführungen vorgesehen, wie sie von Werkzeugmaschinen bekannt sind, z.B. zwecks Verschiebung eines Werkstücktisches auf einem Maschinensockel. Verglichen mit dem eingangs erwähnten Stand der Technik wird das Lagergehäuse (zusammen mit dem darin ruhenden Lagerzapfen) - bei einer Längsdehnung der Walze, Trommel oder dergleichen - parallel zur Längsachse sehr sicher geführt, auch bei Übertragung relativ hoher Kräfte.

Weiter wird es möglich, daß sich das Lagergehäuse - beispielsweise bei einer Temperaturerhöhung - unabhängig vom Sockel quer zur Längsachse der Lagerbaugruppe (z.B. Längsachse der Walze) dehnen kann, ohne daß in den Gleitführungselementen die Gefahr des Klemmens besteht. Die genannte Wärmedehnung des Lagergehäuses kann insbesondere in der Richtung der sogenannten Führungsebene stattfinden, die durch die Achsen der zwei Gleitführungselemente bestimmt ist. Wesentlich ist, daß für wenigstens eine der beiden Gleitführungselemente eine sogenannte "Quer-Verschiebbarkeit" - relativ zum Sockel oder relativ zum Lagergehäuse - vorgesehen wird.

Durch die im Anspruch 2 angegebene besonders vorteilhafte Gestaltung der Gleitführungselemente wird zusätzlich erreicht, daß die Lagerbaugruppe für beliebige Einbau-Situationen-anwendbar wird, also sowohl für stehende als auch für hängende Anordnungen oder für eine seitliche Befestigung an einem Gestell.

Anspruch 3 besagt mit anderen Worten, daß das Lagergehäuse an wenigstens einem der Gleitführungselemente keinerlei Bewegungsmöglichkeit quer zur Längsachse hat, daß es also ausschließlich parallel zur Längsachse wandern kann.

Die genannten Gleitführungselemente werden vorzugsweise gemäß den Ansprüchen 4 und/oder 5 am Umfang des Lagergehäuses angeordnet. Wenn mittels der zwei Gleitführungselemente relativ große Kräfte (z.B. das Eigengewicht einer aus zwei Preßwalzen bestehenden Preßvorrichtung) vom Lagergehäuse auf den Sockel übertragen werden müssen, dann versucht man, die zwei Gleitführungselemente möglichst gleichmäßig zu belasten. Im einfachsten Fall liegen die zwei Preßwalzen senkrecht übereinander. Hierbei können die Merkmale zumindest eines der Ansprüche 6 bis 8 angewandt werden. Es kann aber auch vorkommen, daß das Eigengewicht einer Walze oder eines Trockenzylinders durch nur eine der beiden Gleitführungselemente vom Lagergehäuse auf den Sockel übertragen wird, beispielsweise wenn der Sockel an der Seite eines Gestells befestigt werden muß. In diesem Fall kann es zweckmäßig sein, den Querschnitt des kraftübertragenden Gleitführungselements größer zu machen als den Querschnitt des anderen Gleitführungselements, das in diesem Fall überwiegend nur zur Führung dient.

Es gibt mehrere konstruktive Möglichkeiten für die Realisierung der Quer-Verschiebbarkeit des einen Gleitführungselements oder beider Gleitführungselemente. Bevorzugt wird eine Ausführungsform, bei der das betreffende Gleitführungselement zwei zueinander parallele Führungsflächen aufweist, die an entsprechenden Gleitflächen des Lagergehäuses oder des Sockels anliegen. Mit anderen Worten es werden zwei zueinander parallele Gleitflächenpaare gebildet.

Eine andere Möglichkeit besteht darin, daß wenigstens eines der Gleitführungselemente in einem flexiblen Arm ruht, der ein Teil entweder des Lagergehäuses oder des Sockels ist.

Vorzugsweise wird die Quer-Verschiebbarkeit nur für eines der beiden Gleitführungselemente vorgesehen. Dies bedeutet, daß die Position der Längsachse des anderen Gleitführungselements sowohl im Sockel als auch im Lagergehäuse unverändert bleibt. Diese Bauweise hat zur Folge, daß die Längsachse der Lagerbaugruppe und somit die Längsachse der darin gelagerten Walze an einer Quer-Verschiebung des beweglichen Gleitführungselements teilnimmt. Allerdings beträgt die Größe der Quer-Verschiebung der Walzen-Längsachse nur ungefähr die Hälfte der Quer-Verschiebung des Gleitführungselements. Da außerdem diese temperaturbedingten Quer-Verschiebungen in der Regel sehr viel kleiner als 1mm sind können sie in vielen Anwendungsfällen toleriert werden. Beispielsweise in Papierherstellungsmaschinen, in denen die Erfindung hauptsächlich anwendbar ist, vorzugsweise in Walzenpressen zum Entwässern oder zum Glätten der Papierbahn, hat man es bisher sorgfältig vermieden, den Lagern für eine Walze die Möglichkeit für eine Quer-Verschiebung zu geben. Die Erfindung beruht also u.a. auf der Erkenntnis, daß eine derartige Quer-Verschiebung in vielen Anwendungsfällen durchaus zulässig ist.

Bei anderen Ausführungsformen der Erfindung ist die genannte Quer-Verschiebbarkeit für beide Gleitführungselemente vorgesehen. Dies kann z.B. dann vorteilhaft sein, wenn das Maß der Quer-Verschiebbarkeit eines einzelnen Gleitführungselements nicht ausreicht, wenn also eine besonders große Wärmedehnung beispielsweise des Lagergehäuses zu erwarten ist. Die Quer-Verschiebbarkeit beider Gleitführungselemente ist insbesondere dann notwendig, wenn eine Quer-Verschiebung der Längsachse der Lagerbaugruppe (und somit der Walzen-Längsachse) vermieden werden soll. In diesem Fall ist es erforderlich, zwischen den zwei Gleitführungselementen ein zusätzliches Führungselement vorzusehen mit im wesentlichen senkrecht zur Stangenebene - und in geringem Abstand voneinander - angeordneten Gleitflächenpaaren. Dieses zusätzliche Führungselement sorgt dafür, daß die Wärmedehnung des Lagergehäuses (oder des Sockels) je zur Hälfte gleichmäßig nach beiden Seiten hin stattfindet. Hierdurch bleibt die Position der Längsachse der Lagerbaugruppe unverändert.

Ausführungsbeispiele der Erfindung werden nachfolgend anhand der Zeichnung beschrieben.
Die Fig. 1 ist eine Seitenansicht auf eine Walzenpresse in Richtung des Pfeiles I der Fig. 2.
Die Fig. 2 ist ein Längsschnitt entlang der Linie II der Fig. 1.
Die Figuren 3 und 4 sind Teilschnitte entlang der Linien III bzw. IV der Fig. 1.
Figur 5 zeigt eine schematische Seitenansicht einer Lagerbaugruppe, die von Fig. 1 abweicht.
Die Fig. 6 ist ein Teilschnitt durch ein weiteres Ausführungsbeispiel, mit einem Schnittverlauf, der ungefähr der Linie VII-VII der Fig. 5 entspricht.
Die Fig. 7 zeigt eine (z.B. für einen Trockenzylinder) vorgesehene Lagerbaugruppe für den seitlichen Anbau an ein vertikales Gestell.
Die Fig. 8 ist ein Teilschnitt entlang der Linie IX der Fig. 7.
Die Fig. 9 zeigt eine weitere von Fig. 1 abweichende Lagerbaugruppe in einer schematischen Seitenansicht.
Die Fig. 10 bis 17 zeigen unterschiedliche Bauformen prismatischer Axialführungselemente.
Die Figuren 16A und 17B sind Schnitte nach Linie A der Fig. 16 bzw. nach Linie B der Fig. 17, während die Fig. 16 und 17 Schnitte nach Linie C der Fig. 16A bzw. nach Linie D der Fig. 17B sind.
Die Fig. 18 zeigt eine Weiterentwicklung des Beispieles gemäß Fig. 9.

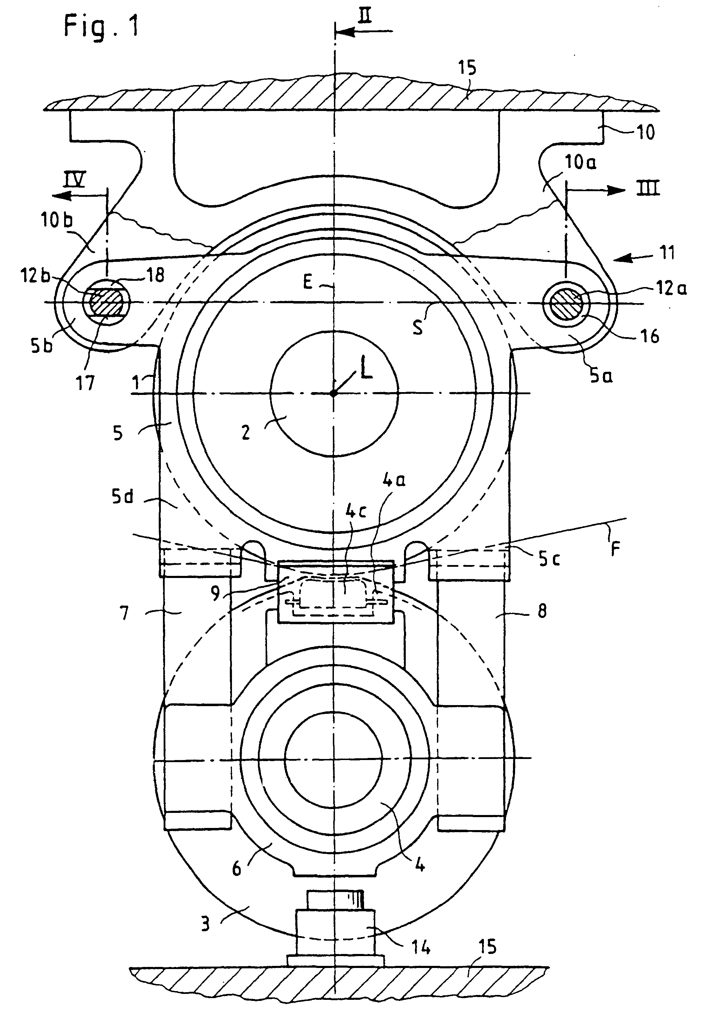

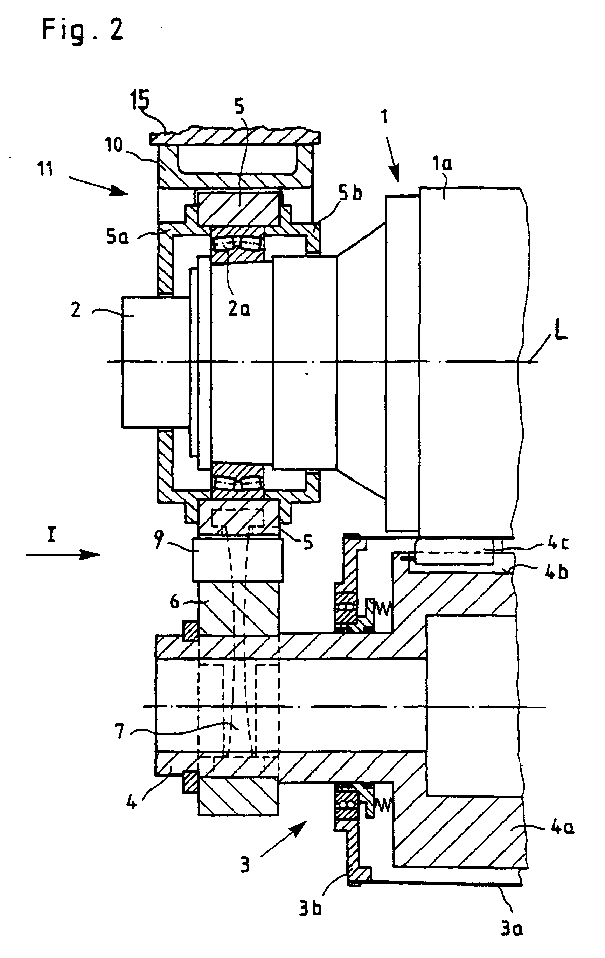

Die in den Figuren 1 und 2 dargestellte Walzenpresse umfaßt zahlreiche schon bekannte Elemente, nämlich eine normale Preßwalze 1 und eine Langspalt-Preßwalze 3. Die normale Preßwalze 1 liegt beim dargestellten Beispiel oberhalb der Langspalt-Preßwalze 3; jedoch ist auch die umgekehrte Anordnung möglich. Die Hauptachsen der Preßwalzen 1 und 3 liegen in einer Preßebene E, die beim dargestellten Ausführungsbeispiel vertikal verläuft. Die Preßwalze 1 hat einen um die Längsachse L drehbaren metallischen Walzenmantel 1a und einen daran befestigten Lagerzapfen 2, der mittels eines Pendelrollenlagers 2a in einem Lagergehäuse 5 (mit Deckeln 5a und 5b) ruht. Das Lagergehäuse 5 bildet mit einem Sockel 10 (und mit weiter unten beschriebenen Zusatzelementen) eine insgesamt mit 11 bezeichnete Lagerbaugruppe, die hängend an der Unterseite eines obenliegenden Teiles eines (nur teilweise sichtbaren) rahmenförmigen Maschinengestells 15 befestigt ist. Das Wälzlager 2a ist im Lagergehäuse 5 axial nicht verschiebbar; denn es ist zwischen die Deckel 5a und 5b eingespannt.

Die untenliegende Langspalt-Preßwalze 3 hat einen drehbaren Walzenmantel 3a, der als schlauchförmger, flexibler Preßmantel ausgebildet und an beiden Enden an je einer drehbaren Manteltragscheibe 3b befestigt ist. Die letztere ruht auf dem stationären Lagerzapfen 4 eines stationären Tragkörpers 4a, der sich durch das Innere des Walzenmantels 3a erstreckt. Der Tragkörper 4a hat gegenüber der normalen Preßwalze 1 eine Ausnehmung 4b und darin einen kolbenartigen und hydraulisch betätigbaren Preßschuh 4c. Dieser Preßschuh preßt mit seiner konkaven Gleitfläche den Preßmantel 3a gegen die Preßwalze 1, um hierdurch einen (in Laufrichtung) verlängerten Preßspalt zu bilden. Durch diesen läuft eine zu entwässernde Papierbahn zusammen mit wenigstens einem endlosen Filzband F.

Der stationäre Lagerzapfen 4 des Tragkörpers 4a ruht in einem Lagerbock 6. Dieser hängt mit Hilfe von zwei (beispielsweise I-förmigen) Zugstäben 7 und 8 am Lagergehäuse 5 der (oberen) Preßwalze 1. Diese Zugstäbe übertragen die aus der Preßkraft resultierende Reaktionskraft unmittelbar vom Lagerbock 6 zum Lagergehäuse 5, so daß das Maschinengestell 15 nur das Eigengewicht der beiden Preßwalzen 1 und 3 tragen muß. Die (beispielsweise biegeweichen) Zugstäbe 7 und 8 erlauben es, daß der Lagerzapfen 4 und der Lagerbock 6 gemeinsam relativ zum Lagergehäuse 5 ein wenig in Längsrichtung wandern und/oder sich aus der horizontalen Richtung neigen. Ein Zwischenstück 9 dient hauptsächlich zur Führung des Lagerbockes 6 in der Preßebene E. Die Zugstäbe 7 und 8 und das Zwischenstück 9 können (nach Anheben des Lagerbockes 6 mittels einer Hubeinrichtung 14) entfernt werden, um einen Wechsel des Filzbandes F und/oder des Walzenmantels 3a zu ermöglichen.

Damit das Lagergehäuse 5 der Preßwalze 1 relativ zum Maschinengestell 15 in der Richtung der Walzen-Längsachse L verschiebbar ist (um eine Längsdehnung des Walzenkörpers 1a, 2 zu ermöglichen) ist folgendes vorgesehen: Das Lagergehäuse 5 hat beidseitig der Preßebene E je einen Arm 5a und 5b. Jeder dieser Arme erstreckt sich zwischen zwei paarweise angeordnete Arme 10a bzw. 10b des Sockels 10. Parallel zur Walzen-Längsachse L erstrecken sich zwei Gleitführungselemente, die als Führungsstangen 12a und 12b ausgebildet sind. Die eine (vorzugsweise zylindrische) Führungsstange 12a ruht in Bohrungen der Arme 5a und 10a, die andere Stange 12b in Bohrungen der Arme 5b und 10b. Die Achsen der Führungsstangen liegen in einer sogenannten Führungsebene S, die beim dargestellten Ausführungsbeispiel horizontal liegt. Hierdurch werden die beiden Führungsstangen quer zu ihrer Längsachse gleichmäßig je durch die Hälfte des Eigengewichtes der kompletten Walzenpresse belastet.

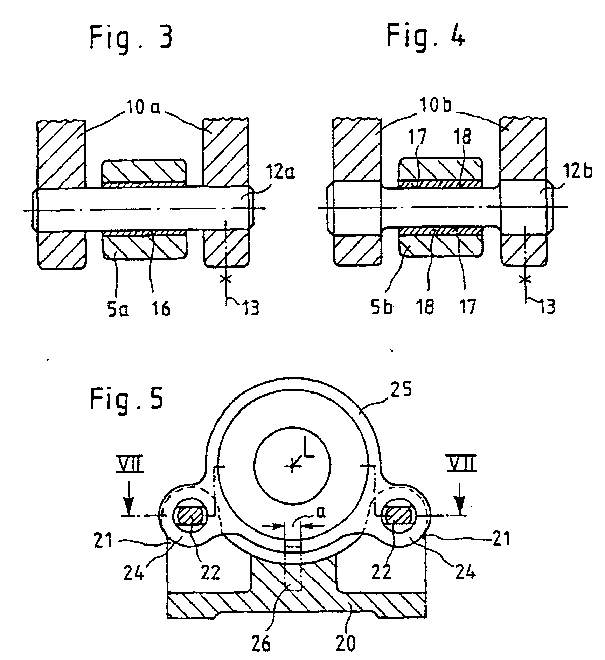

Aus den Figuren 3 und 4 ist ersichtlich, daß zu beiden Seiten jedes Armes 5a bzw. 5b des Lagergehäuses 5 einige Millimeter Abstand vorgesehen sind zu den benachbarten Armen 10a bzw. 10b, so daß sich Lagergehäuse 5 und Sockel 10 relativ zueinander in Achsrichtung bewegen können. Aus Fig. 1 ist ersichtlich, daß die beiden Führungsstangen 12a und 12b und die Längsachse der Preßwalze 1 miteinader ein stumpfwinkliges (und vorzugsweise gleichschenkliges) Dreieck bilden, wobei die Preßwalzen-Längsachse L in der stumpfwinkligen Ecke des Dreiecks angeordnet ist. Alternativ hierzu kann die Preßwalzen-Längsachse in der Führungsebene S liegen.

Die beiden Führungsstangen 12a und 12b sind beispielsweise in je einem der Sockel-Arme 10a, 10b fixiert, beispielsweise mittels einer (nur symbolisch dargestellten) Stellschraube 13. Die Führungsstange 12a hat über ihre gesamte Länge einen gleichbleibenden Durchmesser. Zur Verminderung der Gleitreibung kann im Arm 5a eine Gleithülse 16 vorgesehen sein. Die Innenfläche der Gleithülse 16 und die Oberfläche der Stange 12a bilden ein Flächenpaar mit einem sehr niedrigen Reibungskoeffizienten.

Alle diese Maßnahmen erlauben, wie schon erwähnt, eine Längsdehnung des Walzenkörpers 2, 2a. Dieser kann sich außerdem unter der Preßkraft durchbiegen; deshalb sind selbsteinstellende Pendelrollenlager 2a vorgesehen.

Damit sich das Lagergehäuse 5, z.B. unter Wärme-Einwirkung, seitlich (also quer zur Preßebene E) ausdehnen kann, ist folgendes vorgesehen: Die Führungsstange 12b hat im Bereich des Armes 5b zwei zueinander parallele Führungsflächen 17, die an entsprechenden Gleitflächen des Armes 5b anliegen. Diese Führungsflächen 17 liegen, in Fig. 1 gesehen, ungefähr parallel zu der genannten Führungsebene S, die durch die Achsen der Führungsstangen 12a und 12b bestimmt ist. Außerdem ist der Durchmesser der Führungsstange 12b im Bereich des Armes 5b reduziert, zumindest um das Maß der erwarteten Wärmedehnung des Lagergehäuses. Die genannten Gleitflächen des Armes 5b können vorzugsweise durch Zylinderabschnitte 18 gebildet werden, die in die Bohrung des Armes 5b eingepaßt sind. Im Bereich der Arme 10b hat die Führungsstange 12b den normalen kreisförmigen Querschnitt, dessen Durchmesser dem gemeinsamen Durchmesser der Zylinderabschnitte 18 entspricht. Die Führungsflächen 17 und die Gleitflächen der Zylinderabschnitte 18 sind derart ausgebildet, daß sie einen niedrigen

Reibungskoeffizienten haben. Zusätzlich kann im Arm 5b (um die Zylinderabschnitte 13 herum) eine Gleithülse vorgesehen werden. Die beschriebene Konstruktion ermöglicht es, daß der Arm 5b des Lagergehäuses 5 (zusammen mit den Zylinderabschnitten 18) relativ zur Führungsstange 12b und zum Sockel 10 seitlich geringfügig wandern kann. Die Zylinderabschnitte 18 können somit als ein Bestandteil des Armes 5b angesehen werden. Alternativ zur dargestellten Bauweise könnte im Arm 5b anstelle der Bohrung eine rechteckige Ausnehmung vorgesehen werden. Eine weitere Alternative wäre, anstelle der dargestellten Führungsstange 12b eine Stange mit durchgehend rechteckigem Querschnitt vorzusehen.

Die in Fig. 1 dargestellte Anordnung könnte ohne weiteres um 180° gewendet werden, so daß sie mit Hilfe des Sockels 10 auf dem unteren Bereich des Maschinengestelles 15 steht. Eine derartige Lagerbaugruppe ist in Figur 5 dargestellt. Man erkennt dort wieder ein Lagergehäuse 25 mit zwei beidseitig angeordneten Armen 24. In Figur 5 hat der Sockel 20 wiederum zwei Armpaare 21. In Fig. 5 sind zwei gleiche Führungsstangen 22 vorgesehen, die beide (entsprechend der Führungsstange 12b der Fig. 1 und 4) ein Führungsflächenpaar 17 aufweisen. Falls erforderlich, kann in der Mitte zwischen den beiden Führungsstangen ein zusätzliches Führungselement 26 vorgesehen werden, das wiederum zwei zueinander parallele Führungsflächen aufweist, die in geringem Abstand a voneinander und symmetrisch zur Längsachse L der Lagerbaugruppe angeordnet sind. Das Führungselement 26 greift sowohl in das Lagergehäuse 25 als auch in den Sockel 20 ein.

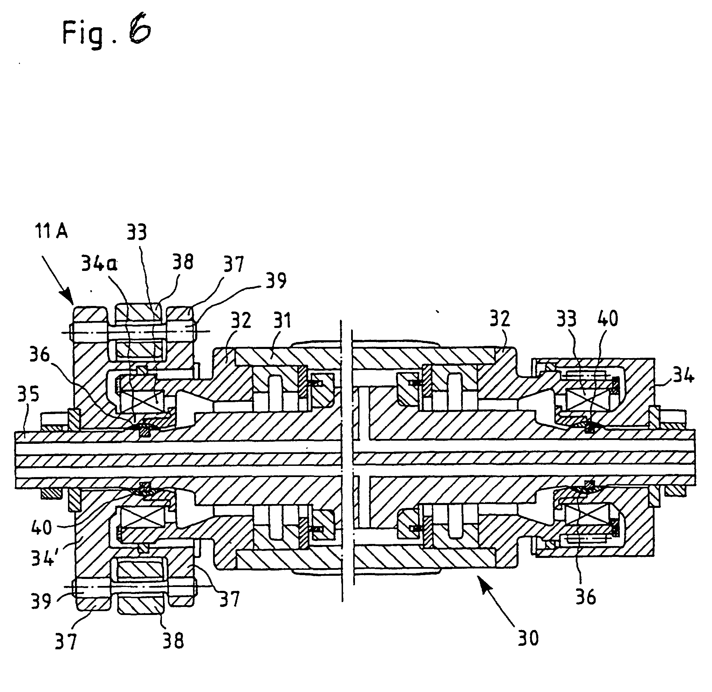

Die Fig. 6 zeigt eine Durchbiegungseinstellwalze 30, die an ihrem einen Walzenende eine erfindungsgemäße Lagerbaugruppe 11A aufweist. Die wesentlichen Elemente der Walze 30 sind ein metallischer Walzenmantel 31, der an beiden Walzenenden mittels eines Lagerhalses 32 und eines Pendelrollenlagers 33 auf der Außenseite eines rohrförmigen Kragarmes 34a eines Lagergehäuses 34, 34' gelagert ist. Ein stationäres Joch 35 ist ebenfalls an beiden Walzenenden mittels einer kugeligen Büchse 36 im Inneren des rohrförmigen Kragarmes 34a gelagert, und zwar axial nicht verschiebbar. Letzteres deshalb, weil die Büchse 36 mittels eines Ringes 40 axial fixiert ist. Die kugeligen Büchsen 36 erlauben eine Durchbiegung des Jochs 35. Für das (in der Zeichnung) linke Walzenende gilt folgendes: Unterhalb des Lagerhalses 32 (in Fig. 6 gesehen) umgreift das Lagergehäuse 34' den Lagerhals. Das Lagergehäuse 34' hat dort zu beiden Seiten des Lagerhalses 32 ein Arm-Paar 37. Dazwischen erstreckt sich auf jeder Seite ein Arm 38 eines im übrigen nicht sichtbaren Sockels. Lagergehäuse und Sockel sind wiederum miteinander durch zwei Führungsstangen 39 verbunden, die in den Armen 38 des Sockels quer verschiebbar sind, entsprechend den obigen Erläuterungen zu den Figuren 1 bis 5. Diese Konstruktion erlaubt eine Längsdehnung des Jochs 35.

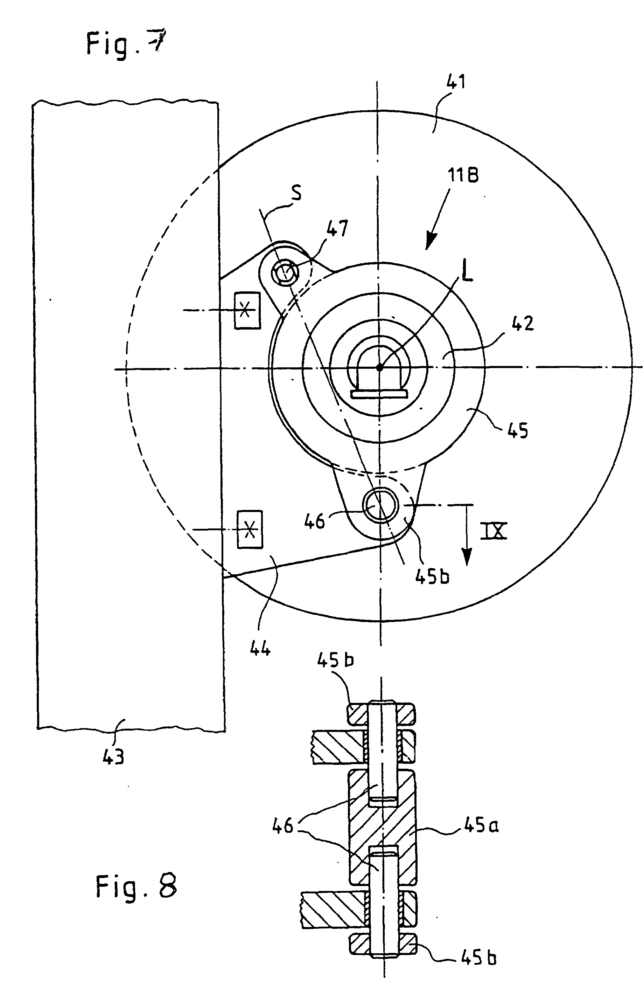

Die in den Figuren 7 und 8 dargestellte Lagerbaugruppe 11B dient zur Lagerung eines drehbaren und mittels Dampf heizbaren Trockenzylinders 41, der in bekannter Weise einen drehbaren Lagerzapfen 42 aufweist. Die Lagerbaugruppe 11B setzt sich wiederum zusammen aus einem Lagergehäuse 45, einem Sockel 44 sowie zwei Führungsstangen 46 und 47. Der Lagerzapfen 42 ist mittels eines nicht sichtbaren Wälzlagers im Lagergehäuse 45 drehbar gelagert. In Achsrichtung ist das Lagergehäuse am Lagerzapfen 42 fixiert. Der Sockel 44 ist an einer beispielsweise vertikalen Seitenfläche eines Gestells 43 angeschraubt.

Abweichend von Fig. 1 hat das in den Figuren 7 und 8 dargestellte Lagergehäuse 45 im Bereich jeder Führungsstange nicht nur einen einzigen Arm, sondern insgesamt drei Arme, nämlich einen mittleren Arm 45a und zwei äußere Arme 45b. Der Sockel 44 hat im Bereich jeder Führungsstange wiederum zwei Arme 44a, die sich zwischen die Arme 45a und 45b des Lagergehäuses erstrecken. Abweichend von Fig. 1 ist jede Führungsstange 46 bzw. 47 in zwei zueinander koaxiale Stangenhälften unterteilt, wie in Fig. 8 am Beispiel der Stange 46 dargestellt. Die somit zweiteilige Führungsstange 46 ist vertikal unterhalb der Drehachse L des Trockenzylinders 41 angeordnet. Die beiden Führungsstangenhälften 46 haben über ihre gesamte Länge einen gleichbleibenden Durchmesser; ihre Achse ist somit sowohl im Sockel 44 als auch im Lagergehäuse 45 fixiert. Der Durchmesser dieser zweiteiligen Führungsstange 46 ist größer als der Durchmesser der (ebenfalls zweiteiligen) Führungsstange 47. Die letztere hat entsprechend den Figuren 1 und 4 zueinander parallele Führungsflächen und gestattet somit eine thermische Ausdehnung des Lagergehäuses 45, in der Richtung der Führungsebene S. Zur Übertragung der Gewichtskraft des Trockenzylinders 41 dient in Fig. 7 nahezu ausschließlich die untere zweiteilige Führungsstange 46. Das in Fig. 7 dargestellte Ausführungsbeispiel zeigt, daß Sockel 44 und Lagergehäuse 45 sowie die Führungsstangen 46 und 47 nicht unbedingt symmetrisch zur Kraftrichtung liegen müssen. Eine solche symmetrische Anordnung ist jedoch insbesondere dann vorteilhaft, wenn die erfindungsgemäße Lagerbaugruppe die Gewichtskraft einer kompletten Preßvorrichtung (z.B. gemäß den Fig. 1 und 2) übertragen muß und wenn deren Preßebene E vertikal angeordnet ist.

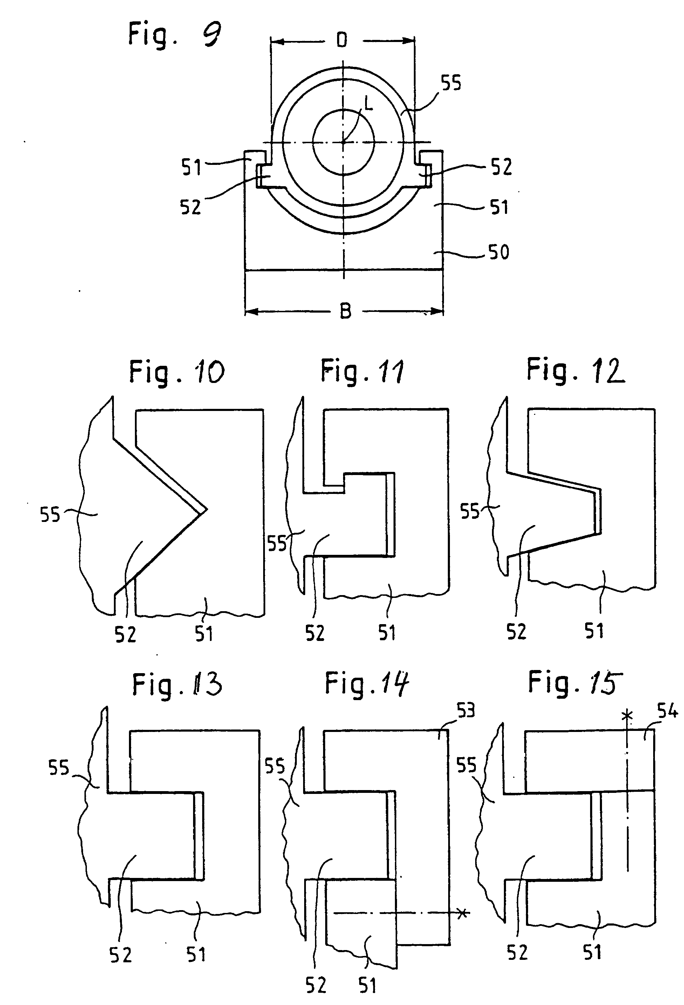

Die bisher beschriebenen Ausführungsbeispiele haben stangenförmige Gleitführungselemente, von denen jedes ein separates Bauteil darstellt also unabhängig vom Lagergehäuse und vom Sockel gefertigt wird. Abweichend hiervon zeigt die Fig. 9 eine Lagerbaugruppe, deren Gleitführungselemente als prismatische Leisten 52 ausgebildet sind. Diese Leisten 52 sind an das Lagergehäuse 55 angeformt und greifen in entsprechende Ausnehmungen des Sockels 50 ein. Wie beispielsweise in den Figuren 1 und 5 sind die Gleitführungselemente 52 an einander entgegengesetzten Bereichen des Umfanges des Lagergehäuses 55 angeordnet und erstrecken sich wiederum parallel zur Längsachse L der Lagerbaugruppe, also senkrecht zur Zeichnungs-Ebene. Ähnlich wie in Fig. 5 ruhen beide Gleitführungselemente 52 mit seitlichem Spiel in den Ausnehmungen des Sockels 50. Falls erforderlich, wird man also in Fig. 9 ein zusätzliches Führungselement vorsehen, entsprechend dem zusätzlichen Führungselement 26 der Fig. 5.

Der Sockel 50 umgreift den Teil des Lagergehäuses 55, an den die Leisten 52 angeformt sind, mit zwei Armen 51. Am Ende jedes Armes 51 ist eine der genannten Ausnehmungen vorgesehen, so daß das Ende jedes Armes eine klauenartige (oder klauen-ähnliche) Form aufweist.

Die Querschnittsform der prismatischen Leisten 52 kann recht unterschiedlich sein, wie die Fig. 10-13 zeigen. Die Fig. 10 zeigt eine dreieckige Querschnittsform, die Fig. 11 eine L-förmige, die Fig. 12 eine trapez-förmige und die Fig. 13 (ähnlich wie die Fig. 9) eine rechteckige Querschnittsform. Um die Montage der Lagerbaugruppe zu erleichtern, kann - gemäß Fig. 14 oder 15 - das klauenförmige Ende wenigstens eines der beiden Arme 51 zerlegbar ausgebildet sein. Mit anderen Worten: ein Klauenteil 53 bzw. 54 ist mittels Schrauben am Hauptteil des Sockels 50, 51 befestigt. Gemäß Fig. 14 hat das entfernbare Klauenteil 53 einen L-förmigen Querschnitt; dagegen ist in Fig. 15 ein entfernbares Klauenteil 54 mit rechteckigem Querschnitt vorgesehen.

In Fig. 9 ist der Außendurchmesser des Lagergehäuses 55 mit D bezeichnet und die Breite des Sockels 50 mit B. Dank der prismatischen und an das Lagergehäuse 55 angeformten Gleitführungselemente 52 ist die Breite B nur geringfügig größer als der Außendurchmesser D des Lagergehäuses. Diese Bauweise ist also relativ kompakt und platzsparend, verglichen mit den Ausführungsformen mit stangenförmigen Gleitführungselementen, beispielsweise gemäß den Fig. 1 und 5.

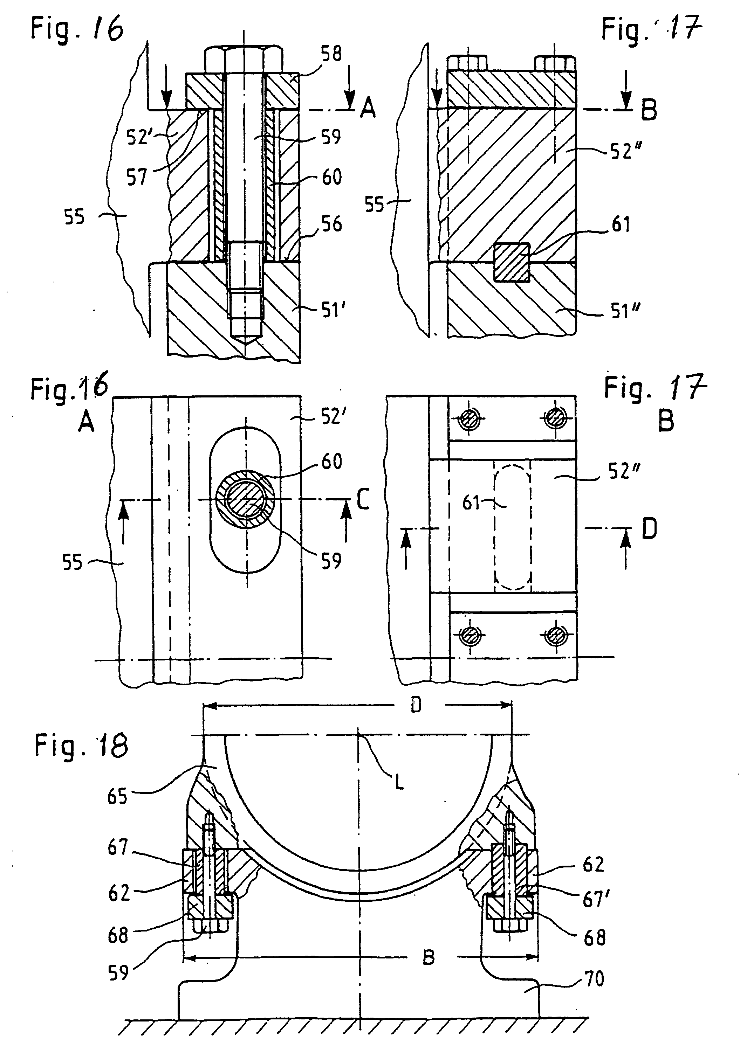

Ein Vergleich der Fig. 15 und 16 zeigt, daß man die Breite B des Sockels 50 relativ zum Außenmaß D des Lagergehäuses 55 noch weiter verkleinern kann. Zu diesem Zweck ist zur Führung einer der prismatischen Leisten 52' des Lagergehäuses 55 folgendes vorgesehen: Das Ende des Sockelarmes 51' hat eine erste Gleitfläche 56, auf dem das Lagergehäuse 55 mit der Leiste 52' ruht. Eine zweite Gleitfläche 57 ist an einer Hilfsleiste 58 vorgesehen. Die letztere wird mittels einer Schraube 59 und einer Distanzhülse 60 in einem gewissen Abstand von der ersten Gleitfläche 56 gehalten. Dieser Abstand ist geringfügig größer als die Dicke der Leiste 52', so daß Klemmen vermieden wird. Gemäß den Fig. 16 und 16A durchdringen die Schraube 59 und die Distanzhülse 60 die prismatische Leiste 52'. Dabei ist zwischen der Distanzhülse 60 und der Leiste 52' ein seitliches Spiel vorhanden, so daß wiederum eine Querdehnung des Lagergehäuses 55 möglich ist. Eine hiervon abweichende Konstruktion ist in den Fig. 17 und 17B dargestellt. Hier ist zwischen das Ende des Sockel-Armes 51" und die prismatische Leiste 52" des Lagergehäuses 55 eine Paßfeder 61 eingesetzt, die sich parallel zur Längsachse L der Lagerbaugruppe erstreckt. Die Paßfeder 61 erlaubt somit ein Verschieben des Lagergehäuses 55 parallel zur Längsachse L der darin gelagerten Walze, jedoch keine Querverschiebung des Lagergehäuses.

Die Fig. 18 zeigt eine weitere möglich Abwandlung der zuvor beschriebenen Ausführungsbeispiele. Zwei prismatische (im wesentlichen Rechteck-Querschnitt aufweisende) Leisten 62 sind nicht an das Lagergehäuse 65, sondern an den Sockel 70 angeformt. Diese Leisten 62 greifen (allgemein gesagt) in Ausnehmungen des Lagergehäuses 65 ein. Im einzelnen ist eine der Fig. 16 entsprechende Bauweise mit einer Hilfsleiste 68 und mit einer Distanzhulse 67 bzw. 67' vorgesehen. Die eine Distanzhülse 67' hat kein seitliches Spiel relativ zum Sockel 70; sie dient deshalb zum seitlichen Führen des Lagergehäuses 65. Die andere Distanzhülse 67 hat dagegen ein seitliches Spiel relativ zum Sockel 70; sie erlaubt deshalb eine Quer-Dehnung des Lagergehäuses 65. Dadurch, daß die Leisten 62 in einem (verglichen mit Fig. 9) relativ großen Abstand von der horizontalen Mittelebene des Lagergehäuses 65 liegen, kann die Sockel-Breite B noch weiter verkleinert werden; sie ist in Fig. 18 nur noch wenig größer als der Außendurchmesser D des Lagergehäuses. Falls erforderlich, kann die Sockel-Breite B bis auf das Maß D noch weiter reduziert werden.

## Patentansprüche

1. Lagerbaugruppe (11) zur Lagerung eines drehbaren oder stationären Lagerzapfens einer drehbaren Walze (1), Trommel oder dergleichen, mit den folgenden Merkmalen:
1.1 der Lagerzapfen (2) ist in einem Lagergehäuse (5) abgestützt;
1.2 in Richtung der Längsachse (L) der Lagerbaugruppe (11) ist der Lagerzapfen (2) im Lagergehäuse (5) fixiert;
1.3 das Lagergehäuse (5) ist über Gleitführungen von einem Sockel (10) getragen, der an einem Gestell (15) oder Fundament befestigt ist;
1.4 die Gleitführung umfaßt Gleitführungselemente (12a, 12b; 22; 52), die parallel zu der Längsachse (L) verlaufende Gleitflächen haben, so wie zugeordnete Gegengleitflächen;
1.5 der Lagerzapfen ist mittels eines kugeligen Lagerelementes (2a) im Lagergehäuse (5) abgestützt;
1.6 wenigstens eines (12b) der Gleitführungselemente (12a, 12b; 22; 52) ist mit seiner Gleitfläche gegenüber seiner zugeordneten Gegengleitfläche quer zur Längsachse (L) verschiebbar, so daß das Lagergehäuse (5) quer zum Sockel (10) verschiebbar ist.

2. Lagerbaugruppe nach Anspruch 1, **gekennzeichnet durch** eine derartige Ausbildung der Gleitführungselemente (12a, 12b: 22; 52), daß das Lagergehäuse (5) und der Sockel (10) ineinander eingreifen.

3. Lagerbaugruppe nach Anspruch 2, **dadurch gekennzeichnet, daß** wenigstens eines der Gleitführungselemente (12a, 12b; 22; 52) quer zur Längsachse eine formschlüssige Verbindung zwischen dem Lagergehäuse (5) und dem Sockel (10) bildet.

4. Lagerbaugruppe nach Anspruch 2 oder 3, **dadurch gekennzeichnet, daß** zwei Gleitführungselemente (12a, 12b; 22; 52) an einander entgegengesetzten Bereichen des Umfanges des Lagergehäuses (5) angeordnet sind.

5. Lagerbaugruppe nach Anspruch 4, **dadurch gekennzeichnet, daß** die Längsachse (L) der Lagerbaugruppe (11) und die Achsen der Gleitführungselemente (12a, 12b; 22; 52), in Achsrichtung gesehen, in den Ecken eines stumpfwinkligen Dreiecks angeordnet sind, wobei die genannte Längsachse der stumpfwinkligen Ecke zugeordnet ist.

6. Lagerbaugruppe nach Anspruch 5, **dadurch gekennzeichnet, daß** das genannte Dreieck gleichschenklig ist.

7. Lagerbaugruppe nach einem der Ansprüche 4 bis 6, **dadurch gekennzeichnet, daß** eine sogenannte Führungsebene (S), die durch die Achsen der beiden Gleitführungselemente (12a, 12b; 22; 52) bestimmt ist, im wesentlichen senkrecht zur Richtung der Kraft liegt, welche die Gleitführungselemente vom Lagergehäuse (5) auf den Sockel (10) übertragen.

8. Lagerbaugruppe nach einem der Ansprüche 4 bis 7, **dadurch gekennzeichnet, daß** die beiden Gleitführungselemente als Führungsstangen (12a, 12b) ausgebildet sind, die sowohl in das Lagergehäuse (5) als auch in den Sockel (10) eingreifen und die vorzugsweise wenigstens angenähert gleiche Querschnitts-Abmessungen aufweisen.

9. Lagerbaugruppe nach einem der Ansprüche 1 bis 8, **dadurch gekennzeichnet, daß** das quer verschiebbare Gleitführungselement (12b) wenigstens angenähert parallel zur Führungsebene (S) quer verschiebbar ist.

10. Lagerbaugruppe nach einem der Ansprüche 1 bis 9, **dadurch gekennzeichnet, daß** das quer verschiebbare Gleitführungselement (12b) zwei Führungsflächen (17) aufweist, die sowohl zueinander als auch zur Achse des Gleitführungselements parallel sind und die an entsprechenden Gleitflächen des Lagergehäuses (5) oder des Sockels (10) anliegen.

11. Lagerbaugruppe nach Anspruch 10, **dadurch gekennzeichnete daß** das genannte Gleitführungselement (12b) eine zylindrische Führungsstange ist, und daß die Gleitflächen von Zylinderabschnitten (18) gebildet sind, die - im Querschnitt gesehen - an einem gemeinsamen Kreis liegen, dessen Durchmesser gleich dem Durchmesser des Gleitführungselements (12b) ist.

12. Lagerbaugruppe nach einem der Ansprüche 1 bis 11, **gekennzeichnet durch** die folgenden Merkmale:
a) beide Gleitführungselemente (22) sind quer verschiebbar;
b) zwischen den beiden Gleitführungselementen (22) ist ein zusätzliches Führungselement (26) vorgesehen, das einerseits in das Lagergehäuse (25) und andererseits in den Sockel (20) eingreift und das zwei zueinander parallele und im wesentlichen senkrecht zur Führungsebene (S) und parallel zur Längsachse (L) angeordnete Gleitflächenpaare aufweist.

13. Lagerbaugruppe nach Anspruch 12, **dadurch gekennzeichnet, daß** die Gleitflächenpaare des zusätzlichen Gleitführungselements (26) in kleinem Abstand (a) voneinander und relativ zur Längsachse der Lagerbaugruppe symmetrisch angeordnet sind.

14. Lagerbaugruppe nach einem der Ansprüche 1-7, 9, 10, 12 oder 13, **dadurch gekennzeichnet, daß** die Gleitführungselemente als prismatische Leisten (52) ausgebildet und an Gleitflachen des Sockels (50) oder des Lagergehäuses (65) geführt sind.

15. Lagerbaugruppe nach Anspruch 14, **dadurch gekennzeichnet, daß** die Leisten (52) an das Lagergehäuse (5) oder an den Sockel (70) angeformt sind.

16. Lagerbaugruppe nach Anspruch 14 oder 15, **dadurch gekennzeichnet, daß** eines der beiden Bauteile, das Lagergehäuse (65) oder der Sockel (50), Ausnehmungen zur Aufnahme der prismatischen Leisten (52;62) aufweist.

17. Lagerbaugruppe nach Anspruch 16, **dadurch gekennzeichnet, daß** jede der Ausnehmungen durch ein klauenförmiges Ende eines Armes (51) gebildet ist.

18. Lagerbaugruppe nach Anspruch 17, **dadurch gekennzeichnet, daß** das klauenförmige Arm-Ende zerlegbar ist.

19. Lagerbaugruppe nach Anspruch 14 oder 15, **gekennzeichnet durch** die folgenden Merkmale:
a) eines der beiden Bauteile, nämlich das Lagergehäuse (65) oder der Sockel (50), hat zur Führung jeder der prismatischen Leisten (52; 62) eine erste Gleitfläche (56) und eine - in einem Abstand von dieser angeordnete - zweite Gleitfläche, die an einer Hilfsleiste (58; 68) vorgesehen ist;
b) die Hilfsleiste (58; 68) ist mittels wenigstens eines Distanzstückes (60; 67) und mittels Verbindungselementen (59) in dem genannten Abstand von der ersten Gleitfläche (56) gehalten.

20. Lagerbaugruppe nach Anspruch 19, **dadurch gekennzeichnet, daß** sich das Distanzstück (60) und die Verbindungselemente (59) quer durch die prismatische Leiste (52') erstrecken.

## Claims

1. Bearing subassembly (11) for mounting a rotatable or stationary bearing journal of a rotatable roll (1), drum or the like, having the following features:
1.1 the bearing journal (2) is supported in a bearing housing (5);
1.2 in the direction of the longitudinal axis (L) of the bearing subassembly (11), the bearing journal (2) is fixed in the bearing housing (5);
1.3 the bearing housing (5) is carried via sliding guides by a base (10), which is fixed to a frame (15) or foundation;
1.4 the sliding guide comprises sliding guide elements (12a, 12b; 22; 52) which have sliding surfaces running parallel to the longitudinal axis (L) and associated mating sliding surfaces;
1.5 the bearing journal is supported in the bearing housing (5) by means of a spherical bearing element (2a);
1.6 at least one (12b) of the sliding guide elements (12a, 12b; 22; 52) can be displaced transversely with respect to the longitudinal axis (L) with its sliding surface opposite its associated mating sliding surface, so that the bearing housing (5) can be displaced transversely with respect to the base (10).

2. Bearing subassembly according to Claim 1, **characterized by** a design of the sliding guide elements (12a, 12b; 22; 52) such that the bearing housing (5) and the base (10) interengage.

3. Bearing subassembly according to Claim 2, **characterized in that** at least one of the sliding guide elements (12a, 12b; 22; 52) forms a form-fitting connection between the bearing housing (5) and the base (10), transversely with respect to the longitudinal axis.

4. Bearing subassembly according to Claim 2 or 3, **characterized in that** two sliding guide elements (12a, 12b; 22; 52) are arranged in mutually opposite regions of the circumference of the bearing housing (5).

5. Bearing subassembly according to Claim 4, **characterized in that** the longitudinal axis (L) of the bearing subassembly (11) and the axes of the sliding guide elements (12a, 12b; 22; 52), viewed in the axial direction, are arranged at the corners of an obtuse-angled triangle, the aforementioned longitudinal axis being associated with the obtuse-angled corner.

6. Bearing subassembly according to Claim 5, **characterized in that** the aforementioned triangle is isosceles.

7. Bearing subassembly according to one of Claims 4 to 6, **characterized in that** what is known as a guide plane (S), which is determined by the axes of the two sliding guide elements (12a, 12b; 22; 52), lies substantially at right angles to the direction of the force which the sliding guide elements transmit from the bearing housing (5) to the base (10).

8. Bearing subassembly according to one of Claims 4 to 7, **characterized in that** the two sliding guide elements are formed as guide rods (12a, 12b), which engage both in the bearing housing (5) and in the base (10) and which preferably have at least approximately identical cross-sectional dimensions.

9. Bearing subassembly according to one of Claims 1 to 8, **characterized in that** the transversely displaceable sliding guide element (12b) can be displaced transversely at least approximately parallel to the guide plane (S).

10. Bearing subassembly according to one of Claims 1 to 9, **characterized in that** the transversely displaceable sliding guide element (12b) has two guide surfaces (17) which are parallel both to each other and to the axis of the sliding guide element and which bear on corresponding sliding surfaces of the bearing housing (5) or of the base (10).

11. Bearing subassembly according to Claim 10, **characterized in that** the aforementioned sliding guide element (12b) is a cylindrical guide rod, and **in that** the sliding surfaces are formed by cylindrical sections (18) which, viewed in cross section, lie on a common circle whose diameter is equal to the diameter of the sliding guide element (12b).

12. Bearing subassembly according to one of Claims 1 to 11, **characterized by** the following features:
a) both sliding guide elements (22) are transversely displaceable;
b) provided between the two sliding guide elements (22) is an additional guide element (26), which engages in the bearing housing (25) on one side and in the base (20) on the other side and which has two pairs of sliding surfaces which are parallel to each other and arranged substantially at right angles to the guide plane (S) and parallel to the longitudinal axis (L).

13. Bearing subassembly according to Claim 12, **characterized in that** the pairs of sliding surfaces of the additional sliding guide element (26) are arranged at a short distance (a) from each other and symmetrically relative to the longitudinal axis of the bearing subassembly.

14. Bearing subassembly according to one of Claims 1-7, 10, 12 or 13, **characterized in that** the sliding guide elements are formed as prismatic bars (52) and are guided on sliding surfaces of the base (50) or of the bearing housing (65).

15. Bearing subassembly according to Claim 14, **characterized in that** the bars (52) are integrally moulded on the bearing housing (5) or on the base (70).

16. Bearing subassembly according to Claim 14 or 15, **characterized in that** one of the two components, the bearing housing (65) or the base (50), has recesses to accommodate the prismatic bars (52; 62).

17. Bearing subassembly according to Claim 16, **characterized in that** each of the recesses is formed by a claw-shaped end of an arm (51).

18. Bearing subassembly according to Claim 17, **characterized in that** the claw-shaped arm end can be broken down.

19. Bearing subassembly according to Claim 14 or 15, **characterized by** the following features:
a) one of the two components, namely the bearing housing (65) or the base (15) has a first sliding surface (56) to guide each of the prismatic bars (52; 62) and a second sliding surface, arranged at a distance from the first, which is provided on an auxiliary bar (58; 68);
b) the auxiliary bar (58; 68) is held at the aforementioned distance from the first sliding surface (56) by means of at least one spacer (60; 67) and by means of connecting elements (59).

20. Bearing subassembly according to Claim 19, **characterized in that** the spacer (60) and the connecting elements (59) extend transversely through the prismatic bar (52').

## Revendications

1. Ensemble de palier (11) pour le logement d'un tourillon rotatif ou fixe d'un cylindre (1) rotatif, tambour ou similaire, présentant les caractéristiques suivantes :
1.1 le tourillon (2) est soutenu dans un logement de palier (5) ;
1.2 en direction de l'axe longitudinal (L) de l'ensemble de palier (11), le tourillon (2) est fixé dans le logement de palier (5) ;
1.3 le logement de palier (5) est porté au moyen de guides coulissants par un socle (10) qui est fixé sur un bâti (15) ou une fondation ;
1.4 le guide coulissant comprend des éléments de guidage coulissant (12a, 12b ; 22 ; 52) qui ont des surfaces de glissement agencées parallèlement à l'axe longitudinal (L), ainsi que des contre-surfaces de glissement associées ;
1.5 le tourillon est soutenu au moyen d'un élément de palier (2a) conique dans le logement de palier (5) ;
1.6 au moins l'un (12b) des éléments de guidage coulissant (12a, 12b ; 22 ; 52) peut être déplacé avec sa surface de glissement par rapport à sa contre-surface de glissement associée transversalement à l'axe longitudinal (L), de sorte que le logement de palier (5) peut être déplacé transversalement au socle (10).

2. Ensemble de palier selon la revendication 1, **caractérisé par** une réalisation des éléments de guidage coulissant (12a, 12b ; 22 ; 52) telle que le logement de palier (5) et le socle (10) s'emboîtent l'un dans l'autre.

3. Ensemble de palier selon la revendication 2, **caractérisé en ce qu'**au moins un des éléments de guidage coulissant (12a, 12b ; 22 ; 52) forme transversalement à l'axe longitudinal une liaison par complémentarité de forme entre le logement de palier (5) et le socle (10).

4. Ensemble de palier selon la revendication 2 ou 3, **caractérisé en ce que** deux éléments de guidage coulissant (12a, 12b ; 22 ; 52) sont disposés sur des zones réciproquement opposées du pourtour du logement de palier (5).

5. Ensemble de palier selon la revendication 4, **caractérisé en ce que** l'axe longitudinal (L) de l'ensemble de palier (11) et les axes des éléments de guidage coulissant (12a, 12b ; 22 ; 52), vus dans le sens de l'axe, sont disposés dans les angles d'un triangle à angle obtus, l'axe longitudinal cité étant attribué au coin à angle obtus.

6. Ensemble de palier selon la revendication 5, **caractérisé en ce que** le triangle cité est à trois branches.

7. Ensemble de palier selon l'une quelconque des revendications 4 à 6, **caractérisé en ce qu'**un "plan de guidage" (S), qui est défini par les axes des deux éléments de guidage coulissant (12a, 12b ; 22 ; 52) , est disposé sensiblement perpendiculairement à la direction de la force que les éléments de guidage coulissant transmettent du logement de palier (5) au socle (10).

8. Ensemble de palier selon l'une quelconque des revendications 4 à 7, **caractérisé en ce que** les deux éléments de guidage coulissant sont conçus comme des tiges de guidage (12a, 12b), qui s'engagent aussi bien dans le logement de palier (5) que dans le socle (10) et qui présentent de préférence des dimensions de section transversale au moins approximativement identiques.

9. Ensemble de palier selon l'une quelconque des revendications 1 à 8, **caractérisé en ce que** l'élément de guidage coulissant (12b) pouvant être déplacé dans le sens transversal peut être déplacé transversalement au moins à peu près parallèlement au plan de guidage (S) .

10. Ensemble de palier selon l'une quelconque des revendications 1 à 9, **caractérisé en ce que** l'élément de guidage coulissant (12) pouvant être déplacé transversalement présente deux surfaces de guidage (17) qui sont parallèles aussi bien l'une par rapport à l'autre que par rapport à l'axe de l'élément de guidage coulissant et qui s'appuient sur les surfaces de guidage correspondantes du logement de palier (5) ou du socle (10).

11. Ensemble de palier selon la revendication 10, **caractérisé en ce que** ledit élément de guidage coulissant (12b) est une tige de guidage cylindrique et **en ce que** les surfaces de glissement sont formées de parties cylindriques (18) qui sont disposées, vues en section transversale, sur un cercle commun dont le diamètre est égal au diamètre de l'élément de guidage coulissant (12b).

12. Ensemble de palier selon l'une quelconque des revendications 1 à 11, **caractérisé par** les caractéristiques suivantes :
a) les deux éléments de guidage coulissant (22) peuvent être déplacés transversalement ;
b) entre les deux éléments de guidage coulissant (22) est prévu un élément de guidage (26) supplémentaire qui s'engage d'une part dans le logement de palier (25), et d'autre part dans le socle (20) et qui présente deux paires de surfaces de glissement parallèles entre elles et disposées sensiblement perpendiculairement au plan de guidage (S) et parallèlement à l'axe longitudinal (L).

13. Ensemble de palier selon la revendication 12, **caractérisé en ce que** les paires de surfaces de glissement de l'élément supplémentaire de guidage coulissant (26) sont disposées à faible distance (a) les unes des autres et de façon symétrique par rapport à l'axe longitudinal de l'ensemble de palier.

14. Ensemble de palier selon l'une quelconque des revendications 1 à 7, 9, 10, 12 ou 13, **caractérisé en ce que** les éléments de guidage coulissant sont conçus comme des baguettes (52) prismatiques et sont guidés sur des surfaces de glissement du socle (50) ou du logement de palier (65).

15. Ensemble de palier selon la revendication 14, **caractérisé en ce que** les baguettes (52) sont formées sur le logement de palier (5) ou sur le socle (70).

16. Ensemble de palier selon la revendication 14 ou 15, **caractérisé en ce que** l'un des deux composants, le logement de palier (65) ou le socle (50), présente des évidements pour le logement des baguettes (52 ; 62) prismatiques.

17. Ensemble de palier selon la revendication 16, **caractérisé en ce que** chacun des évidements est formé par une extrémité en forme de griffe d'un bras (51).

18. Ensemble de palier selon la revendication 17, **caractérisé en ce que** l'extrémité de bras en forme de griffe peut être démontée.

19. Ensemble de palier selon la revendication 14 ou 15, **caractérisé par** les caractéristiques suivantes :
a) l'un des deux composants, c'est-à-dire le logement de palier (65) ou le socle (50), a une première surface de glissement (56) pour le guidage de chacune des baguettes (52 ; 62) prismatiques et une seconde surface de glissement, disposée à une certaine distance de la première, qui est prévue sur une baguette auxiliaire (58 ; 68) ;
b) la baguette auxiliaire (58 ; 68) est maintenue à la distance mentionnée de la première surface de glissement (56) au moyen d'au moins une pièce d'espacement (60 ; 67) et au moyen d'éléments de liaison (59).

20. Ensemble de palier selon la revendication 19, **caractérisé en ce que** la pièce d'espacement (60) et les éléments de liaison (59) s'étendent transversalement à travers la baguette (52') prismatique.
